# EUROPEAN PATENT SPECIFICATION

(11) **EP 2 159 769 B1**
(45) Date of publication and mention of the grant of the patent: **16.11.2016**
(21) Application number: 09166223.9
(22) Date of filing: 23.07.2009
(51) Int. Cl.: G08B 17/00, H02G 3/20, H01R 13/74, H01R 33/94, H02G 3/14

(54) **Improvements in and relating to electrical connection systems**
Verbesserungen an und in Zusammenhang mit elektrischen Verbindungssystemen
Améliorations dans et concernant des systèmes de connexion électriques

(30) Priority: 28.08.2008 GB 0815640
(43) Date of publication of application: 03.03.2010
(73) Proprietor: Protec Fire Detection plc, Nelson, Lancashire BB9 6RT (GB)
(72) Inventor: Russell, Barrie, Clitheroe, Lancashire BB7 3LA (GB)
(74) Representative: Appleyard Lees IP LLP

(56) References cited:
- EP-A1- 1 191 652
- WO-A2-02/073558
- DE-A1- 10 011 905
- GB-A- 1 467 768
- US-A1- 2006 108 137
- US-B1- 6 780 049

## Description

The present invention relates to electrical connection systems and finds particular but not exclusive use in electrical systems mounted in ceilings, such as fire or smoke detection systems.

EP1191652 discloses an electrical connection device according to the preamble of claim 1.

Prior art smoke detection systems, such as those fitted in a commercial or industrial environment, comprise a plurality (often hundreds) of detectors, often daisy-chained together in loops including many tens of units. Co-pending and co-assigned patent application WO2007/138340 discloses a connection device suitable for use in situations where a detector must be fitted to a suspended ceiling, for instance. This prior application discloses a novel connection technique as well as the means by which such a sensor can be fitted to a ceiling.

However, a further problem is often encountered when installing a detector system in a building where the ceiling itself has not yet been installed. The fire detection system is usually one of the last systems to be installed and, as such, there is a lot of pressure on the installation engineer(s) to ensure that it is completed on time. This pressure can have very real financial consequences, whereby damages may be payable for every day that installation takes beyond the agreed nominal completion date.

An aim of embodiments of the present invention is to allow quicker, easier installation of a smoke/fire detector system, particularly, but not exclusively, in cases where no suspended ceiling has yet been installed to which the individual sensor heads are to be fitted.

According to the present invention there is provided an apparatus as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a lower perspective view of an embodiment of the invention;
Figure 2 shows an upper perspective view of an embodiment of the invention; and
Figures 3a-3d show the steps in an installation of an embodiment of the present invention.

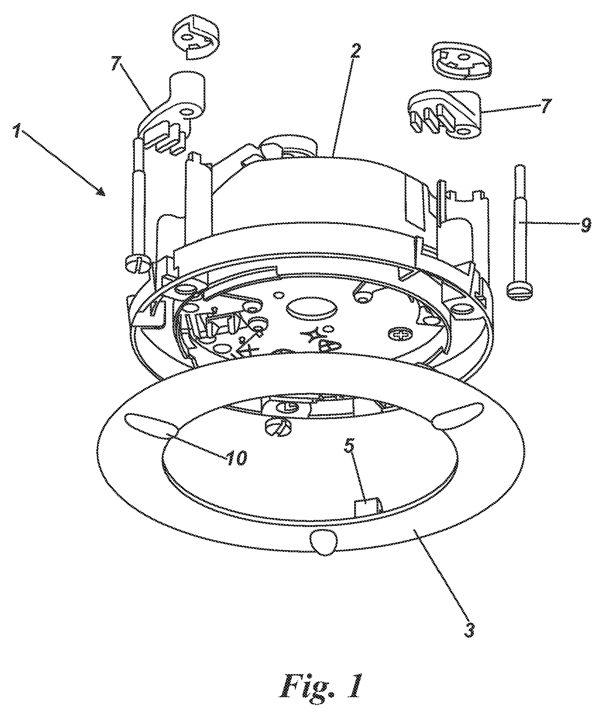

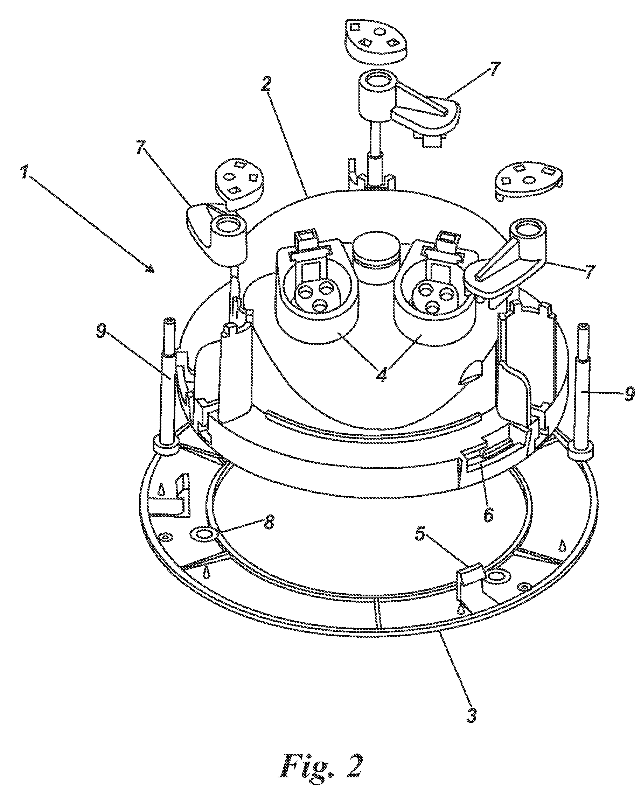

Figures 1 and 2 show a view of a detector base 1 according to an embodiment of the invention. The detector base 1 is housed in a ceiling, connected to one or more other such devices and/or a control system and is arranged to receive an operation unit such as a smoke/fire detector or sounder unit.

The detector base 1 comprises a housing 2 which is arranged to sit in the ceiling void, normally behind a suspended ceiling tile. The housing 2 has a plurality of electrical connectors 4 for coupling the detector base to either one or more other detector bases or terminating at a control panel. The electrical connectors in this embodiment take the form of sockets arranged to receive pre-formed cables terminated in complementary plugs. Other forms of electrical connection are possible, including screw terminals, spade connectors or similar.

The detector base 1 may be used in two distinct situations. As mentioned, the fire/smoke detection system is often the last part, or one of the last parts, of a building's infrastructure to be installed and it is possible that the system has to be installed either before or after the installation of a suspended ceiling, which is also normally concluded late in the process.

In order to accommodate both types of installation, the detector base 1 is provided with a removable bezel plate 3 which couples to the housing 2. In the case where a ceiling is already in place, with wiring provided in the ceiling void, then the detector base 1 can be preassembled with the bezel plate 3 attached to the housing 2 by use of protrusions 5 on the bezel plate 3, which mate with corresponding apertures 6 on the housing. The coupling is achieved by inserting protrusions 5 into apertures 6 and then rotating the bezel plate slightly to cause it to lock in position.

To secure the detector base in position in a pre-prepared hole in the ceiling, the cabling is drawn out through the hole and connected to the detector base at sockets 4. The detector base 1 is then offered up to the hole and the housing 2 penetrates the hole, causing the bezel plate 3 to abut the external surface of the ceiling.

In order to secure the detector base in position, three fixing wings 7 are provided. In the configuration shown in Figures 1 and 2, the fixing wings 7 are rotated inwards and lie within the circumference of the housing 2, allowing the housing to penetrate the hole in the ceiling. To allow the fixing wings to rotate out of this position, a screwdriver is inserted through hole 8 in the bezel plate 3 to contact and rotate screw 9. By rotation of screw 9, the fixing wing 7 is rotated out of its insertion position to lie outside the circumference of the housing 2. By continued rotation of screw 9, the fixing wing is caused to travel down the screw thread and thus clamps the ceiling tile between the fixing wing and the bezel plate 3. Once this is repeated for all three fixing wings, the detector base 1 is firmly held in position.

A feature of the bezel plate 3, provided to ensure its correct attachment to the housing 2, is that the screw holes 8 only align with the screws 9 once the bezel has been correctly twisted into position relative to the housing 2. This ensures that the bezel and housing are firmly attached and able to clamp the ceiling properly.

Cosmetic screw covers 10 are provided to conceal the screw holes 8 in the bezel plate 3.

In some installations, the suspended ceiling is not yet fitted, and the smoke and fire detection system must be fitted first. This can pose problems using prior art devices, as is generally only possible to fit them once the ceiling is already in place. However, by use of detector base 1, without fitting the bezel plate 3, it is possible to completely connect the cabling and detector bases required to configure and test the system, and to complete the installation by fitting the bezel plate at a later date.

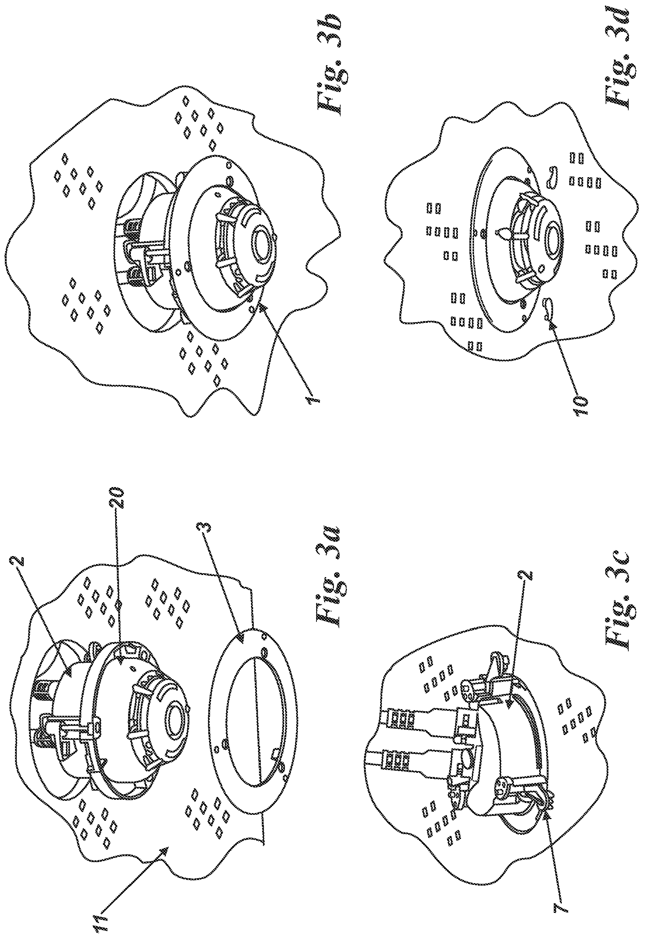

Figures 3a-3d show this type of installation in more detail. In Figure 3a, there is shown a housing 2, which has attached to it an operational unit, such as a sensor head or smoke detector 20. Figure 3a also shows the cabling connected to sockets 4, which has been connected previously.

Once the ceiling 11 has been installed, after the major installation of the smoke/fire detector system, then the installation of the individual detectors can be completed by fixing them in position using the bezel plate 3.

The basic installation details are similar to that which has been previously defined. The main difference is that the housing 2 is already connected and sits inside the ceiling void. To secure it in position, it is withdrawn from the void as shown in Figure 3a, and the bezel plate 3 is attached by inserting protrusions or tags 5 into apertures 6 and twisting the bezel plate to lock it into place.

Once the bezel plate is locked into place, the detector base 1, comprising housing 2 and bezel plate 3, is inserted into the hole in the ceiling and the installation can continue as previously described. This stage is shown in Figure 3b.

The bezel plate may be provided with ceiling-engaging projections which are intended to pierce the surface of the ceiling and assist in holding the device in place.

Figure 3c shows a view, from within the ceiling void, of the housing 2 once securely positioned by fixing wings 7 which are shown contacting the interior surface of the ceiling 11.

Figure 3d shows a view of the detector base in position with an operational unit 20, such as a fire or smoke detector, attached thereto. This figure also shows the cosmetic screw caps and how they attach to the bezel plate 3.

If, in the future, it is necessary to remove the detector base 1 for servicing or maintenance, then the cosmetic screw caps 10 are removed, the screws 9 and rotated, causing the fixing wings to rotate back towards the housing, thus allowing the housing 2 to be removed through the hole in the ceiling.

It will be appreciated that by use of an embodiment of the present invention, it is possible to provide a far greater degree of flexibility than was previously possible. In particular, the fitting of prior art solutions was restricted by whether the suspended ceiling was present or not. In some cases, this could delay fitting the fire/smoke detection system, with consequent possibility of liquidated damages being paid to the customer.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electrical connection device for fitting to a ceiling, comprising:
a housing having at least one electrical connector for coupling the device to one or more similar devices, said housing being arranged to freely pass through a hole in the ceiling;
fixing means provided on the housing and operable from an exposed portion of the device; and
a removable bezel plate, arranged to be larger than the hole, wherein the bezel plate is arranged to attach to the housing and to abut an exposed surface of the ceiling and, in conjunction with the fixing means, to securely fix the device in position **characterised in that** the fixing means comprise a plurality of rotatable wings which, in a first position, lie within the circumference of the housing and allow the housing pass through the hole and which, in a second position, lie outside the circumference of the housing and contact an interior surface of the ceiling.

2. A device as claimed in claim 1 wherein the bezel plate comprises a plurality of protrusions arranged to mate with corresponding apertures provided on the housing and to latch securely by a twisting action.

3. A device as claimed in claim 2 wherein once the bezel plate is in the securely latched position, a plurality of access holes are caused to align with screws for operating the fixing means.

4. A device as claimed in any preceding claim wherein the fixing wings are mounted on a screw, whereby rotation of the screw causes the fixing wings firstly to rotate from the first position and then to travel towards the interior surface of the ceiling.

5. A method of attaching an electrical connection device to a ceiling comprising the steps of:
locating a housing in a hole in the ceiling;
attaching a bezel plate to the housing by inserting protrusions on the bezel plate into corresponding apertures on the housing;
rotating the bezel plate to latch it in place, thereby causing a plurality of access holes to align with means to operate a fixing device; and
operating the fixing device to securely attach the electrical connection device to the ceiling, **characterised in that** the fixing means comprise a plurality of rotatable wings which, in a first position, lie within the circumference of the housing and allow the housing pass through the hole and which, in a second position, lie outside the circumference of the housing and contact an interior surface of the ceiling.

## Patentansprüche

1. Elektrische Verbindungsvorrichtung zur Montage an einer Decke, aufweisend:
ein Gehäuse mit mindestens einem elektrischen Steckverbinder, um die Vorrichtung mit einer oder mehreren gleichen Vorrichtungen zu koppeln, wobei das Gehäuse dafür eingerichtet ist, um ungehindert durch ein Loch in der Decke zu gelangen;
Befestigungsmittel, welche an dem Gehäuse vorgesehen und von einem freiliegenden Abschnitt der Vorrichtung aus bedienbar sind; und
eine abnehmbare Blendenplatte, welche eingerichtet ist, um größer als das Loch zu sein, wobei die Blendenplatte dafür eingerichtet ist, sich an das Gehäuse anzufügen und an einer freiliegenden Fläche der Decke in Verbindung mit den Befestigungsmitteln anzuliegen, um die Vorrichtung an Ort und Stelle sicher zu befestigen, **dadurch gekennzeichnet, dass** die Befestigungsmittel eine Vielzahl von drehbaren Flügeln aufweisen, welche in einer ersten Position innerhalb des Umfangs des Gehäuses liegen und es dem Gehäuse ermöglichen, durch das Loch zu gelangen, und welche in einer zweiten Position außerhalb des Umfangs des Gehäuses liegen und eine Innenfläche der Decke berühren.

2. Vorrichtung nach Anspruch 1, wobei die Blendenplatte eine Vielzahl von Vorsprüngen aufweist, welche eingerichtet sind, um mit entsprechenden Öffnungen an dem Gehäuse zusammen zu passen und durch eine Drehbewegung fest zu verriegeln.

3. Vorrichtung nach Anspruch 2, wobei, wenn sich die Blendenplatte in der fest verriegelten Position befindet, eine Vielzahl von Zugangslöchern veranlasst werden, sich mit Schrauben zum Betätigen der Befestigungsmittel auszurichten.

4. Vorrichtung nach einem der vorhergehenden Ansprüche, wobei die Befestigungsflügel auf einer Schraube montiert sind, wobei Drehen der Schraube die Befestigungsflügel veranlasst, sich von einer ersten Position aus zu drehen und sich dann in Richtung der inneren Fläche der Decke zu bewegen.

5. Verfahren zum Anbringen einer elektrischen Verbindungsvorrichtung an einer Decke, aufweisend die folgenden Schritte:
Anordnen eines Gehäuses in einem Loch in der Decke;
Abbringen einer Blendenplatte an dem Gehäuse, indem Vorsprünge an der Blendenplatte in entsprechende Öffnungen an dem Gehäuse eingesetzt werden;
Drehen der Blendenplatte, um sie an Ort und Stelle zu verriegeln, wodurch eine Vielzahl von Zugangslöchern veranlasst werden, sich mit Mitteln auszurichten, um eine Befestigungsvorrichtung zu betätigen; und
Betätigen der Befestigungsvorrichtung, um die elektrische Verbindungsvorrichtung sicher an der Decke anzubringen, **dadurch gekennzeichnet, dass** die Befestigungsmittel eine Vielzahl von drehbaren Flügeln aufweist, welche in einer ersten Position innerhalb des Umfangs des Gehäuses liegen und dem Gehäuse es ermöglichen, durch das Loch zu gelangen, und welche in einer zweiten Position außerhalb des Umfangs liegen und eine innere Fläche der Decke berühren.

## Revendications

1. Dispositif de connexion électrique destiné à être monté au plafond, comprenant :
un boîtier ayant au moins un connecteur électrique pour accoupler le dispositif à un ou plusieurs dispositifs similaires, ledit boîtier étant prévu pour passer librement à travers un trou dans le plafond ;
des moyens de fixation prévus sur le boîtier et pouvant être actionnés à partir d'une portion exposée du dispositif ; et
une plaque biseautée amovible, prévue pour être plus grande que le trou, la plaque biseautée étant prévue pour être fixée au boîtier et pour buter contre une surface exposée du plafond et, conjointement avec les moyens de fixation, pour fixer solidement le dispositif en position, **caractérisé en ce que** les moyens de fixation comprennent une pluralité d'ailes rotatives qui, dans une première position, sont situées à l'intérieur de la circonférence du boîtier et permettent au boîtier de passer à travers le trou et qui, dans une deuxième position, sont situées à l'extérieur de la circonférence du boîtier et viennent en contact avec une surface intérieure du plafond.

2. Dispositif selon la revendication 1, dans lequel la plaque biseautée comprend une pluralité de saillies prévues pour s'accoupler avec des ouvertures correspondantes prévues sur le boîtier et pour s'emboîter fermement par un effet de torsion.

3. Dispositif selon la revendication 2, dans lequel, une fois que la plaque biseautée est dans la position emboîtée fermement, une pluralité de trous d'accès sont amenés à s'aligner avec des vis pour l'actionnement du moyen de fixation.

4. Dispositif selon l'une quelconque des revendications précédentes, dans lequel les ailes de fixation sont montées sur une vis, ce par quoi la rotation de la vis amène les ailes de fixation à d'abord tourner depuis la première position, puis à se déplacer vers la surface intérieure du plafond.

5. Procédé pour fixer un dispositif de connexion électrique à un plafond, comprenant les étapes suivantes :
positionner un boîtier dans un trou dans le plafond ;
attacher une plaque biseautée au boîtier en insérant des saillies sur la plaque biseautée dans des ouvertures correspondantes sur le boîtier ;
faire tourner la plaque biseautée pour l'emboîter en position, pour ainsi amener une pluralité de trous d'accès à s'aligner avec des moyens pour actionner un dispositif de fixation ; et
actionner le dispositif de fixation pour fixer fermement le dispositif de connexion électrique au plafond, **caractérisé en ce que** les moyens de fixation comprennent une pluralité d'ailes rotatives qui, dans une première position, sont situées à l'intérieur de la circonférence du boîtier et permettent au boîtier de passer à travers le trou et qui, dans une deuxième position, sont situées à l'extérieur de la circonférence du boîtier et viennent en contact avec une surface intérieure du plafond.
